# EUROPEAN PATENT SPECIFICATION

(11) **EP 3 772 425 B1**
(45) Date of publication and mention of the grant of the patent: **08.06.2022**
(21) Application number: 20189389.8
(22) Date of filing: 04.08.2020
(51) Int. Cl.: B60K 1/04, B60K 1/00, B60K 11/06

(54) **VEHICLE BATTERY PACK**
FAHRZEUGBATTERIEPACK
BLOC-BATTERIE DE VÉHICULE

(30) Priority: 08.08.2019 JP 2019146737
(43) Date of publication of application: 10.02.2021
(73) Proprietor: Suzuki Motor Corporation, Shizuoka 432-8611 (JP)
(72) Inventor: HARADA, Yu, Shizuoka, 432-8611 (JP)
(74) Representative: Haseltine Lake Kempner LLP

(56) References cited:
- DE-A1-102016 218 098
- US-A1- 2014 299 393
- US-A1- 2017 320 383
- US-A1- 2018 035 573

## Description

### Technical Field

The present invention relates to a vehicle battery pack.

### Background Art

In a vehicle such as an automobile, a battery may be housed in a luggage compartment at a rear portion of the vehicle. As this type of technology in the related art, a technology described in Patent Literature 1 is known. Patent Literature 1 discloses a cooling structure of an electric apparatus in a vehicle, in which the electric apparatus is disposed below a floor behind a seat and the electric apparatus is cooled by cooling air. The electric apparatus includes a battery for driving a motor for traveling, a DC/DC converter, and an inverter for driving the motor. The DC/DC converter and the inverter for driving the motor are juxtaposed in a vehicle width direction on an upper portion of the battery. The cooling air, which flows from a front side of a vehicle body to a rear side, is divided into upper and lower parts to cool in parallel the battery on a lower side as well as the DC/DC converter and the inverter for driving the motor on an upper side.

### Citation List

### Patent Literature

Patent Literature 1: JP-A-2008-62780

### Summary of Invention

### Technical Problem

However, in the technology of the related art described in Patent Literature 1, battery modules and the inverter are arranged to overlap with each other in an upper-lower direction. Therefore, an impact occurring when the vehicle is collided from a rear side may be applied to the battery modules and the inverter at the same time, and the inverter vulnerable to the impact cannot be protected from the impact. Also, as of US 2018/035573 A1, the battery modules and the inverter are arranged to overlap with each other in an upper-lower direction.

The present invention has been made in view of the above circumstances, and an object thereof is to provide a vehicle battery pack that can protect electrical components from an impact.

### Solution to Problem

According to one advantageous aspect of the present invention, there is provided a vehicle battery pack including: a battery case in which a battery module is built; a first electrical component configured to convert electric power from the battery module; a second electrical component configured to electrically connect the battery module to the first electrical component; and a housing configured to house the battery case, the first electrical component, and the second electrical component. The first electrical component and the second electrical component are arranged side by side on a vehicle front side and a vehicle rear side in a space formed on a lateral side of the battery case in the housing in a vehicle width direction, and are electrically connected to each other via a conductive member. The first electrical component includes a first connection portion to which one end portion of the conductive member is connected. The second electrical component includes a second connection portion to which the other end portion of the conductive member is connected. The first connection portion and the second connection portion are arranged such that height positions of the first connection portion and the second connection portion are different. And the conductive member includes an inclined portion inclined to be higher from the second connection portion toward the first connection portion.

### Brief Description of Drawings

[Fig. 1] Fig. 1 is a plan view of a vehicle battery pack according to an embodiment of the present invention.
[Fig. 2] Fig. 2 is a bottom view of the vehicle battery pack according to the embodiment of the present invention.
[Fig. 3] Fig. 3 is a left side view of the vehicle battery pack according to the embodiment of the present invention.
[Fig. 4] Fig. 4 is a cross-sectional view taken along line IV-IV in Fig. 1.
[Fig. 5] Fig. 5 is a cross-sectional view taken along line V-V in Fig. 1.
[Fig. 6] Fig. 6 is a perspective view of the vehicle battery pack according to the embodiment of the present invention.
[Fig. 7] Fig. 7 is a plan view of an inverter and a switching portion of the vehicle battery pack according to the embodiment of the present invention.
[Fig. 8] Fig. 8 is a cross-sectional view taken along line VIII-VIII in Fig. 4.

### Description of Embodiments

A vehicle battery pack according to an embodiment of the present invention includes: a battery case in which a battery module is built; a first electrical component configured to convert electric power from the battery module; a second electrical component configured to electrically connect the battery module to the first electrical component; a housing configured to house the battery case, the first electrical component, and the second electrical component. The first electrical component and the second electrical component are arranged side by side on a vehicle front side and a vehicle rear side in a space formed on a lateral side of the battery case in the housing in a vehicle width direction, and are electrically connected to each other via a conductive member. The first electrical component includes a first connection portion to which one end portion of the conductive member is connected. The second electrical component includes a second connection portion to which the other end portion of the conductive member is connected. The first connection portion and the second connection portion are arranged such that height positions of the first connection portion and the second connection portion are different. The conductive member includes an inclined portion inclined to be higher from the second connection portion toward the first connection portion. Further, an interval is provided between the first electrical component and the second electrical component. Accordingly, the vehicle battery pack according to the embodiment of the present invention can protect the electrical components from an impact.

### [Embodiment]

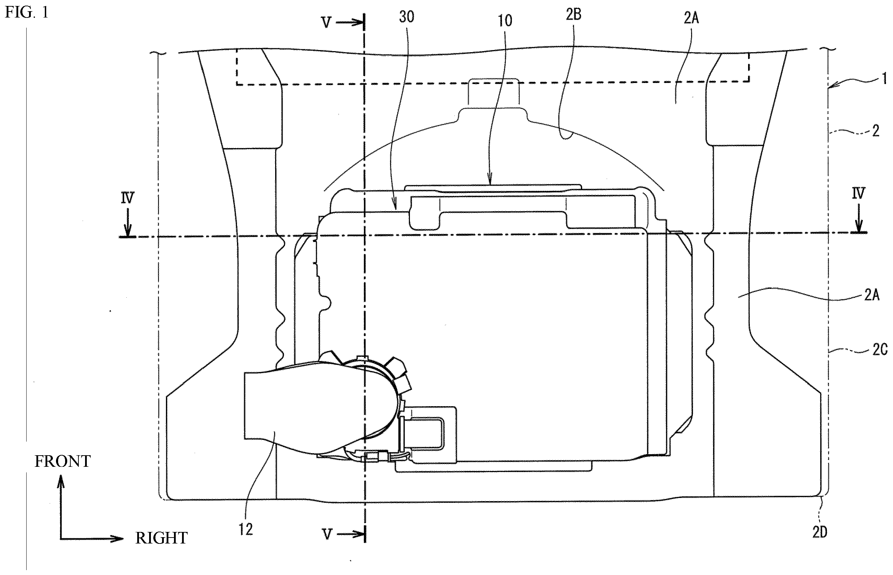

Hereinafter, a vehicle battery pack according to an embodiment of the present invention will be described with reference to the drawings. In Figs. 1 to 8, upper, lower, front, rear, left, and right directions are upper, lower, front, rear, left, and right directions of the vehicle battery pack installed in a vehicle. A direction orthogonal to a front-rear direction of the vehicle is a leftright direction, and a height direction of the vehicle battery pack is an upper-lower direction.

Figs. 1 to 8 are views showing the vehicle battery pack according to an embodiment of the present invention. In Fig. 1, a vehicle battery pack 10 is housed in a recessed portion 2B formed in a rear floor panel 2A at a rear portion of a vehicle body 2 of a vehicle 1. The rear floor panel 2A forms a luggage compartment by a side panel 2C that constitutes a side surface of the vehicle body 2 and a rear panel 2D that constitutes a rear surface of the vehicle body.

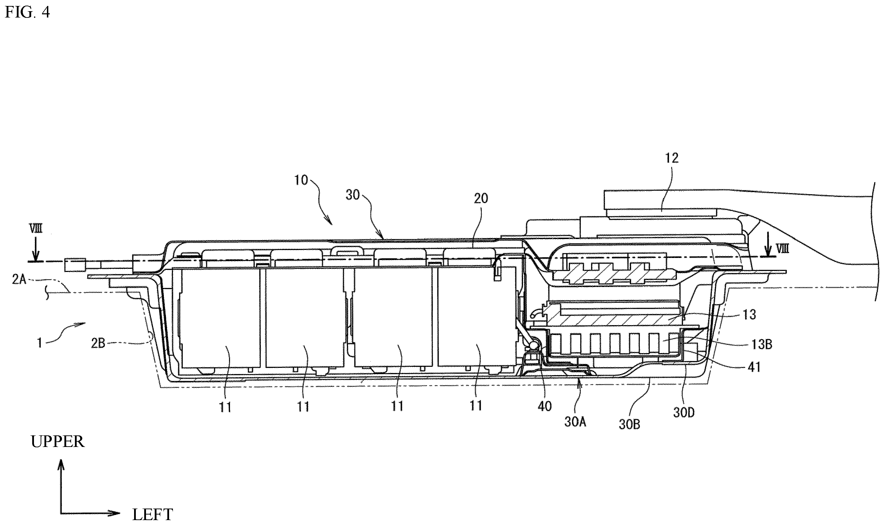

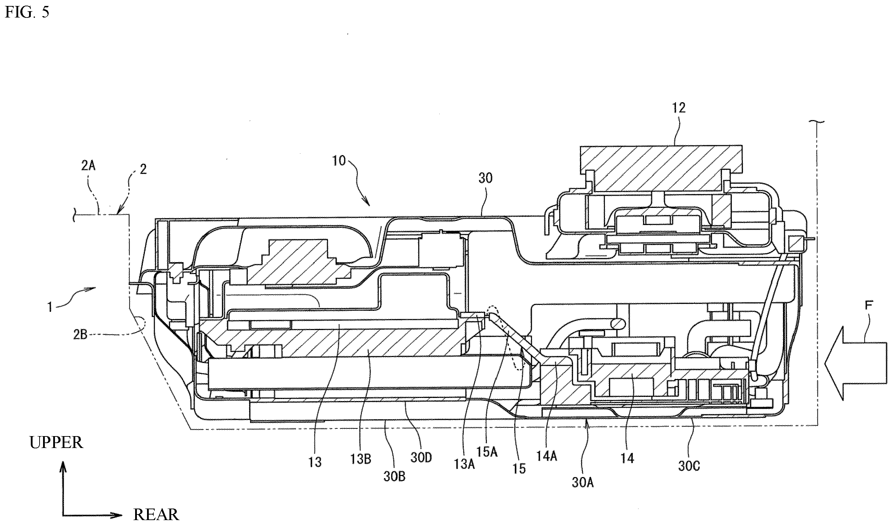

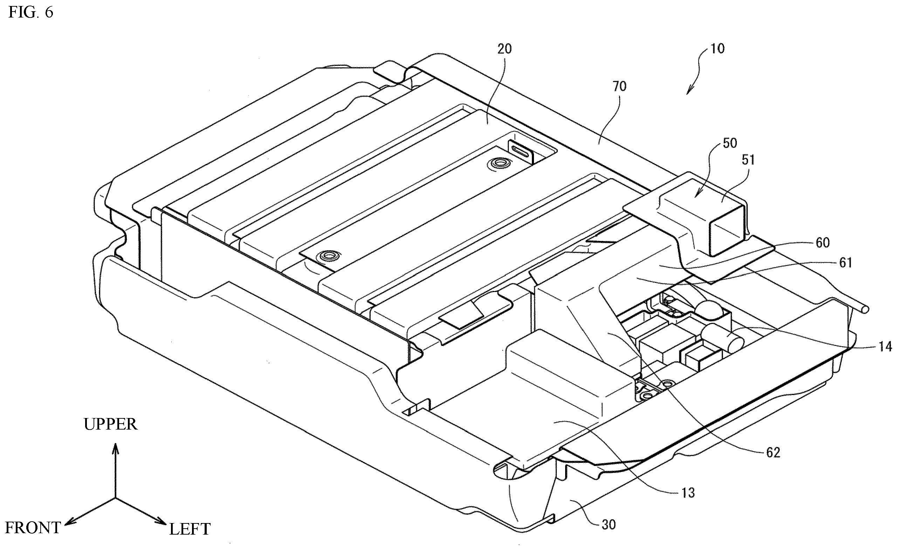

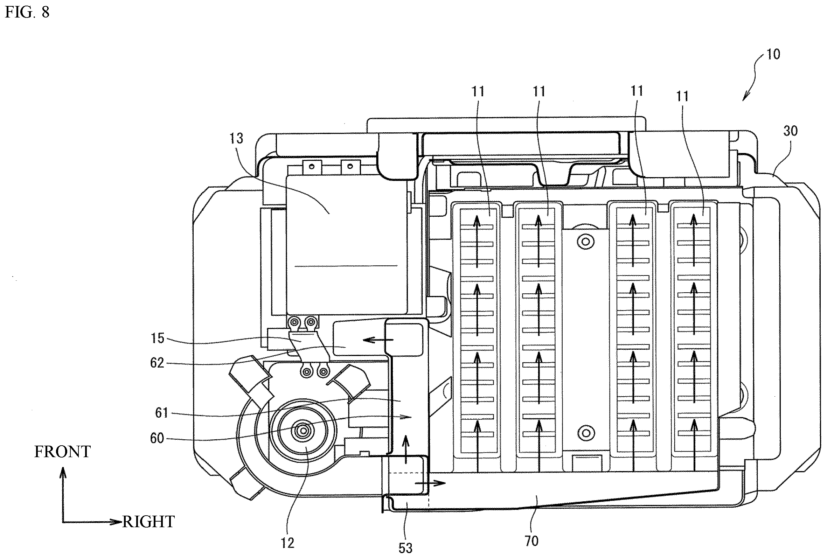

In Fig. 4, the vehicle battery pack 10 includes a battery case 20 in which battery modules 11 are built. In Fig. 5, the vehicle battery pack 10 includes an inverter 13 serving as a first electrical component that converts electric power from the battery modules 11 (see Fig. 4), a switching portion 14 serving as a second electrical component that electrically connects the battery modules 11 to the inverter 13, and a cooling fan 12. Further, as shown in Figs. 6 and 8, the vehicle battery pack 10 includes a duct 50 connected to the cooling fan 12.

In Fig. 5, the vehicle battery pack 10 includes a housing 30. The battery case 20 (see Fig. 4), the inverter 13, the switching portion 14, and the duct 50 (see Fig. 6) are housed in the housing 30.

In Figs. 4 and 8, four battery modules 11 are provided side by side in a vehicle width direction in the battery case 20. Each battery module 11 is formed of an assembled battery in which a plurality of cells are electrically connected. The battery case 20 is disposed in a region on a right side from a central portion of the housing 30 in a vehicle width direction. Therefore, a space in which the inverter 13 and the switching portion 14 are arranged is formed in a region on a left side of the battery case 20 in the housing 30, that is, a region on a lateral side of the battery case 20 in the vehicle width direction.

The cooling fan 12 is disposed on an upper surface of a left rear end portion of the housing 30, and supplies air taken in from outside of the housing 30 to the duct 50. The duct 50 includes an upstream duct 51 connected to the cooling fan 12, a branch duct 53 (see Fig. 8) connected to a lower portion of the upstream duct 51, an electrical component cooling duct 60 that branches from the branch duct 53 and extends forward to the inverter 13, and a battery cooling duct 70 that branches from the branch duct 53 and extends rightward along a rear surface of the battery case 20. In Fig. 8, a portion where the electrical component cooling duct 60 and the battery cooling duct 70 intersect is the branch duct 53, and a boundary of the branch duct 53 is indicated by a broken line.

Air supplied from the cooling fan 12 to the upstream duct 51 flows into the branch duct 53 below the upstream duct 51, branches from the branch duct 53, and flows to the electrical component cooling duct 60 and the battery cooling duct 70. Air that flows from the branch duct 53 into the electrical component cooling duct 60 is supplied to the inverter 13 to cool the inverter 13. Air that flows from the branch duct 53 into the battery cooling duct 70 is supplied from the rear surface of the battery case 20 to inside of the battery case 20 to cool the battery modules 11.

In Fig. 5, the inverter 13 and the switching portion 14 are arranged side by side on a vehicle front side and a vehicle rear side in the space formed on the lateral side of the battery case 20 of the housing 30 in the vehicle width direction. The inverter 13 is disposed in front of the switching portion 14. Further, the inverter 13 and the switching portion 14 are electrically connected to each other via a bus bar 15. The bus bar 15 is formed by forming a conductive flat plate formed of copper or the like in a shape that extends in the vehicle front-rear direction. The bus bar 15 constitutes a conductive member in the present invention.

The inverter 13 includes a first connection portion 13A to which one end portion of the bus bar 15 is connected. The switching portion 14 includes a second connection portion 14A to which the other end portion of the bus bar 15 is connected. The first connection portion 13A and the second connection portion 14A are arranged such that height positions of the first connection portion 13A and the second connection portion 14A are different. The bus bar 15 includes an inclined portion 15A inclined to be higher from the second connection portion 14A toward the first connection portion 13A.

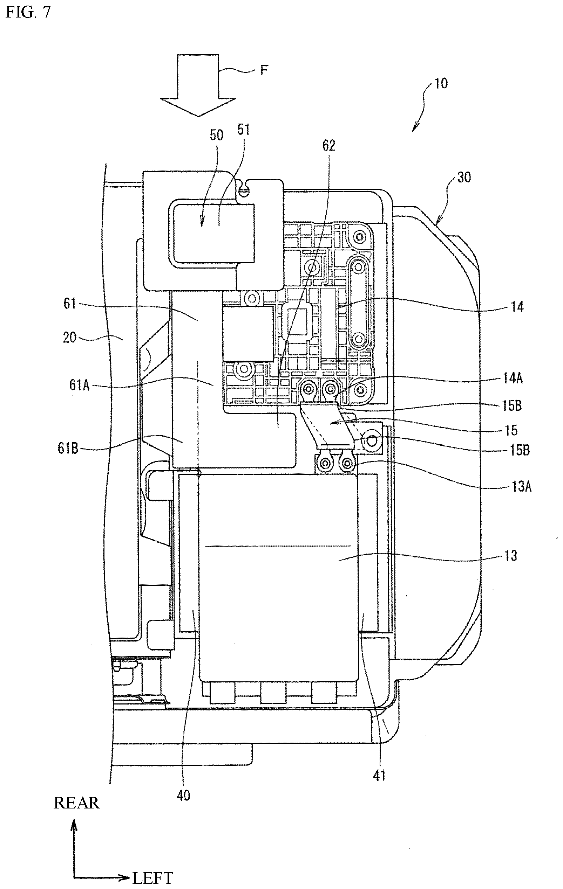

In Fig. 7, the first connection portion 13A is disposed on a side opposite to the battery case 20 in the vehicle width direction with respect to the second connection portion 14A. In other words, the first connection portion 13A is disposed away from the battery case 20, and the second connection portion 14A is disposed close to the battery case 20. Further, in a plan view of Fig. 7, the bus bar 15 includes curved portions 15B that is curved from the second connection portion 14A to the first connection portion 13A.

In Fig. 5, the inverter 13 and the switching portion 14 are arranged at positions lower than an upper surface of the battery case 20. The inverter 13 is disposed in front of the switching portion 14, and a rear side bottom surface of the inverter 13 is disposed at a position higher than a front side upper surface of the switching portion 14.

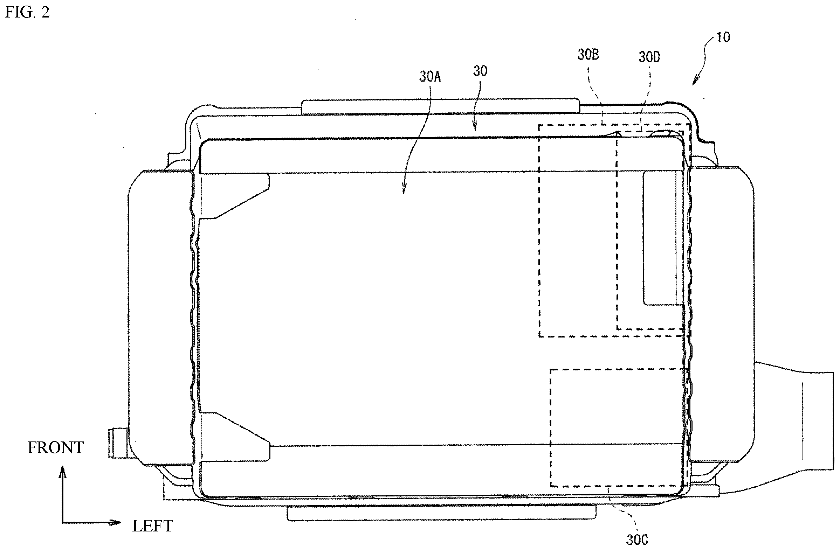

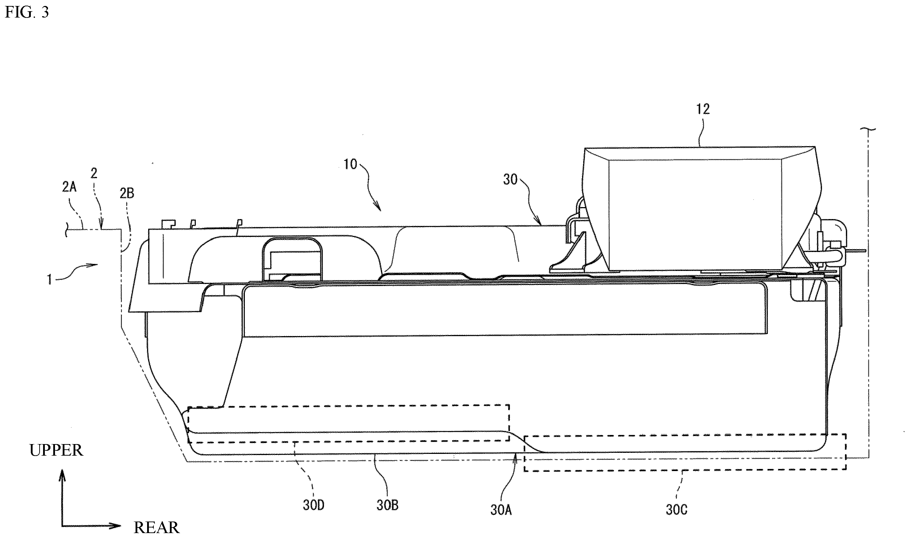

In Fig. 2, a bottom surface 30A of the housing 30 includes a first bottom surface portion 30B that is a region that overlaps with the inverter 13 in the upper-lower direction, and a second bottom surface portion 30C that is a region that overlaps with the switching portion 14 in the upper-lower direction. In Fig. 3, the first bottom surface portion 30B includes a bulging portion 30D that bulges upward than the second bottom surface portion 30C to approach an inverter 13 side. The inverter 13 is supported on an upper surface of the bulging portion 30D via a bracket 41.

In Fig. 1, the cooling fan 12 is provided on a rear end portion of an upper surface of the housing 30. In Fig. 5, the inverter 13 and the cooling fan 12 are arranged at different positions in the height direction. In other words, the inverter 13 is disposed at a position lower than the cooling fan 12.

In Figs. 6, 7, and 8, the vehicle battery pack 10 includes the duct 50 connected to the cooling fan 12. The electrical component cooling duct 60 of the duct 50 includes a vehicle width direction extending portion 62 that extends in the vehicle width direction between the inverter 13 and the switching portion 14. Further, the duct 50 includes a front-rear direction extending portion 61 that extends in the vehicle front-rear direction. As shown in Fig. 7, the front-rear direction extending portion 61 includes a facing portion 61A that faces the inverter 13 in the vehicle front-rear direction, and an outer side portion 61B disposed outward than a side end of the inverter 13 in the vehicle width direction. A rear end portion of the front-rear direction extending portion 61 is continuous with the branch duct 53 (see Fig. 8), and a front end portion of the front-rear direction extending portion 61 is continuous with the vehicle width direction extending portion 62. Accordingly, air that flows from the branch duct 53 into the front-rear direction extending portion 61 changes a direction to a left side at the front end portion of the front-rear direction extending portion 61, flows into the vehicle width direction extending portion 62, and is supplied to the inverter 13.

In Fig. 4, the bracket 41 is disposed below the inverter 13. A heat dissipation member 13B is provided on a lower surface of the inverter 13 while having a gap with respect to the bracket 41. In Fig. 7, the bracket 41 faces the switching portion 14 in the vehicle front-rear direction. An interval between the bracket 41 and the switching portion 14 is set to be smaller than an interval between the inverter 13 and the switching portion 14. As shown in Fig. 7, a right end portion of the inverter 13 is provided with the bracket 40 that supports the right end portion of the inverter 13.

As described above, in the present embodiment, the inverter 13 and the switching portion 14 are arranged side by side on the vehicle front side and the vehicle rear side in the space formed on the lateral side of the battery case 20 of the housing 30 in the vehicle width direction, and are electrically connected to each other via the bus bar 15. Further, the inverter 13 includes the first connection portion 13A to which one end portion of the bus bar 15 is connected. The switching portion 14 includes the second connection portion 14A to which the other end portion of the bus bar 15 is connected. The first connection portion 13A and the second connection portion 14A are arranged such that the height positions of the first connection portion 13A and the second connection portion 14A are different. The bus bar 15 includes the inclined portion 15A inclined to be higher from the second connection portion 14A toward the first connection portion 13A.

Accordingly, even when an external force during a rear collision of the vehicle is applied to the vehicle battery pack 10 disposed at a rear portion of the vehicle from a rear side of the vehicle, and when the battery case 20 disposed in the housing 30 is moved toward a front side of the vehicle, the inverter 13 and the switching portion 14 can be prevented from excessively interfering with the battery case 20, and the inverter 13 and the switching portion 14 can be protected.

Under a situation where an external force F (see Fig. 7) is applied to the inverter 13 side of the vehicle battery pack 10 from the rear side of the vehicle, and where a load is applied to the inverter 13 by the switching portion 14 being moved forward, a relatively large bending moment generated in a side view of the vehicle battery pack 10 (first bending moment) can be applied to the bus bar 15 by the inclined portion 15A provided on the bus bar 15, and the bus bar 15 can be easily plastically deformed as indicated by a broken line in Fig. 5.

The first bending moment is applied to the bus bar 15, so that the load can be absorbed by the bus bar 15. Therefore, a load applied to the switching portion 14 and a load applied to the inverter 13 from the switching portion 14 can be reduced. As a result, the switching portion 14 and the inverter 13, which are the electrical components, can be protected from an impact.

In the present embodiment, the first connection portion 13A is disposed on the side opposite to the battery case 20 in the vehicle width direction with respect to the second connection portion 14A. In a plan view, the bus bar 15 includes the curved portions 15B that is curved from the second connection portion 14A to the first connection portion 13A.

Accordingly, when an external force is applied to the switching portion 14 in the housing 30 from the rear side of the vehicle, a bending moment generated in the bus bar 15 in the plan view of the vehicle battery pack 10 (second bending moment) can be applied. When the second bending moment is applied to the bus bar 15, as indicated by a broken line in Fig. 7, the bus bar 15 can be plastically deformed in a direction in which a first connection portion 13A side is away from the battery case 20, and an impact can be absorbed by the plastic deformation. Therefore, the loads applied to the switching portion 14 and the inverter 13 can be reduced, and the inverter 13 and the switching portion 14 can be protected.

The first connection portion 13A is disposed on the side opposite to the battery case 20 (outer side of the battery pack in the vehicle width direction) with respect to the second connection portion 14A. Therefore, when the switching portion 14 is about to enter the inverter 13 side, the bus bar 15 is plastically deformed in a predetermined mode, so that the inverter 13 can be moved in a direction away from the battery case 20 having high rigidity (leftward), the inverter 13 can be prevented from interfering with the battery case 20, and the inverter 13 can be protected.

In the present embodiment, the inverter 13 and the switching portion 14 are arranged at the positions lower than the upper surface of the battery case 20. The inverter 13 is disposed in front of the switching portion 14, and the rear side bottom surface of the inverter 13 is disposed at the position higher than the front side upper surface of the switching portion 14.

Accordingly, even when the switching portion 14 enters the inverter 13 side, since the front side upper surface of the switching portion 14 enters below the rear side bottom surface of the inverter 13, the switching portion 14 and the inverter 13 can be prevented from strongly interfering with each other on side surfaces.

The inverter 13 and the switching portion 14 are arranged at the positions lower than the upper surface of the battery case 20. Therefore, even when heat generated in the battery case 20 stays in an upper portion in the housing 30, the inverter 13 and the switching portion 14 can be kept away from the heat generated from the battery case 20, and the inverter 13 and the switching portion 14 can be protected from the heat.

In the present embodiment, the bottom surface of the housing 30 includes the first bottom surface portion 30B that is the region that overlaps with the inverter 13 in the upper-lower direction, and the second bottom surface portion 30C that is the region that overlaps with the switching portion 14 in the upper-lower direction. The first bottom surface portion 30B includes the bulging portion 30D that bulges upward than the second bottom surface portion 30C to approach the inverter 13 side. The inverter 13 is supported on the upper surface of the bulging portion 30D via the bracket 41.

In this way, since the first bottom surface portion 30B is provided with the bulging portion 30D that bulges upward than the second bottom surface portion 30C, the inverter 13 can be reliably disposed at a position higher than the switching portion 14 without increasing a length dimension of the bracket 41 in the upper-lower direction.

Even when a load is applied to the inverter 13 from the switching portion 14, the inverter 13 can be stably held by the bulging portion 30D and the bracket 41, the bus bar 15 can be easily plastically deformed, and the switching portion 14 can be prevented from entering the inverter 13 side.

In the present embodiment, the cooling fan 12 is provided on the rear end portion of the upper surface of the housing 30. The inverter 13 and the cooling fan 12 are arranged at different positions in the height direction.

In this way, since the inverter 13 and the cooling fan 12 are arranged at different positions in the height direction, even when the cooling fan 12 is moved toward the front side of the vehicle during a rear collision of the vehicle, the cooling fan 12 can be prevented from interfering with the inverter 13, and the inverter 13 can be protected.

In the present embodiment, the vehicle battery pack 10 includes the duct 50 connected to the cooling fan 12. The duct 50 includes the vehicle width direction extending portion 62 that extends in the vehicle width direction between the inverter 13 and the switching portion 14.

Accordingly, even when the switching portion 14 is moved forward during a rear collision, since a forward load and impact are absorbed by deformation of the vehicle width direction extending portion 62, a load and an impact transmitted from the switching portion 14 to the inverter 13 can be reduced, and the inverter 13 can be protected. Further, even when the switching portion 14 is in contact with the vehicle width direction extending portion 62, an impact transmitted from the switching portion 14 to the inverter 13 side can be reduced.

In the present embodiment, the duct 50 includes the front-rear direction extending portion 61 that extends in the vehicle front-rear direction. The front-rear direction extending portion 61 includes the facing portion 61A that faces the inverter 13 in the vehicle front-rear direction, and the outer side portion 61B disposed outward than the side end of the inverter 13 in the vehicle width direction.

Accordingly, even when the front-rear direction extending portion 61 is moved forward due to a load from a rear side during a rear collision of the vehicle, since the outer side portion 61B of the front-rear direction extending portion 61 is not in direct contact with the inverter 13, a part of a forward load can be converted into a force in a rotation direction and released, and the entire forward load can be prevented from being directly applied to the inverter 13.

In the present embodiment, the bracket 41 is disposed below the inverter 13. The heat dissipation member 13B is provided on the lower surface of the inverter 13 while having a gap with respect to the bracket 41. Further, the bracket 41 faces the switching portion 14 in the vehicle front-rear direction. The interval between the bracket 41 and the switching portion 14 is set to be smaller than the interval between the inverter 13 and the switching portion 14.

Accordingly, even when the switching portion 14 is moved forward during a rear collision of the vehicle, since the switching portion 14 is in contact with the bracket 41 before the inverter 13, a load can be prevented from being directly applied from the switching portion 14 to the inverter 13 and the inverter 13 can be protected.

Although the embodiment of the present invention has been disclosed, it will be apparent to those skilled in the art that modifications may be made without departing from the scope of the present invention as defined by the appended claims

### Reference Signs List

- 1:: Vehicle
- 10:: Vehicle battery pack
- 11:: Battery module
- 12:: Cooling fan
- 13:: Inverter (First electrical component)
- 13A:: Connection portion
- 13B:: Heat dissipation member
- 14:: Switching portion (Second electrical component)
- 14A:: Connection portion
- 15:: Bus bar (Conductive member)
- 15A:: Inclined portion
- 15B:: Curved portion
- 20:: Battery case
- 30:: Housing
- 30A:: Bottom surface
- 30B:: First bottom surface portion
- 30C:: Second bottom surface portion
- 30D:: Bulging portion
- 41:: Bracket
- 50:: Duct
- 61:: Front-rear direction extending portion
- 61A:: Facing portion
- 61B:: Outer side portion
- 62:: Vehicle width direction extending portion

## Claims

1. A vehicle battery pack (10) comprising:
a battery case (20) in which a battery module (11) is built;
a first electrical component (13) configured to convert electric power from the battery module (11);
a second electrical component (14) configured to electrically connect the battery module (11) to the first electrical component (13); and
a housing (30) configured to house the battery case (20), the first electrical component (13), and the second electrical component (14),
**characterized in that**
the first electrical component (13) and the second electrical component (14) are arranged side by side on a vehicle front side and a vehicle rear side in a space formed on a lateral side of the battery case (20) in the housing (30) in a vehicle width direction, and are electrically connected to each other via a conductive member (15),
the first electrical component (13) includes a first connection portion (13A) to which one end portion of the conductive member (15) is connected,
the second electrical component (14) includes a second connection portion (14A) to which the other end portion of the conductive member (15) is connected,
the first connection portion (13A) and the second connection portion (14A) are arranged such that height positions of the first connection portion (13A) and the second connection portion (14A) are different,
the conductive member (15) includes an inclined portion (15A) inclined to be higher from the second connection portion (14A) toward the first connection portion (13A), and
an interval is provided between the first electrical component (13) and the second electrical component (14).

2. The vehicle battery pack (10) according to claim 1, wherein
the first connection portion (13A) is disposed on a side opposite to the battery case (20) in the vehicle width direction with respect to the second connection portion (14A), and
in a plan view, the conductive member (15) includes a curved portion (15B) that is curved from the second connection portion (14A) to the first connection portion (13A).

3. The vehicle battery pack (10) according to claim 1 or 2, wherein
the first electrical component (13) and the second electrical component (14) are arranged at positions lower than an upper surface of the battery case (20),
the first electrical component (13) is disposed in front of the second electrical component (14), and
a rear side bottom surface of the first electrical component (13) is disposed at a position higher than a front side upper surface of the second electrical component (14).

4. The vehicle battery pack (10) according to any one of claims 1 to 3, wherein
a bottom surface (30A) of the housing (30) includes a first bottom surface portion (30B) that is a region that overlaps with the first electrical component (13) in an upper-lower direction, and a second bottom surface portion (30C) that is a region that overlaps with the second electrical component (14) in the upper-lower direction,
an upper surface of the first bottom surface portion (30B) includes a bulging portion (30D) that bulges upward than the second bottom surface portion (30C) to approach the first electrical component (13) side, and
the first electrical component (13) is supported on an upper surface of the bulging portion (30D) via a bracket (41).

5. The vehicle battery pack (10) according to any one of claims 1 to 4, wherein
a cooling fan (12) is provided on a rear end portion of an upper surface of the housing (30), and
the first electrical component (13) and the cooling fan (12) are arranged at different positions in a height direction.

6. The vehicle battery pack (10) according to claim 5, further comprising:
a duct (50) connected to the cooling fan (12), wherein
the duct (50) includes a vehicle width direction extending portion (62) that extends in the vehicle width direction between the first electrical component (13) and the second electrical component (14).

7. The vehicle battery pack (10) according to claim 6, wherein
the duct (50) includes a front-rear direction extending portion (61) that extends in a vehicle front-rear direction, and
the front-rear direction extending portion (61) includes a facing portion (61A) that faces the first electrical component (13) in the vehicle front-rear direction, and an outer side portion (61B) disposed outward than a side end of the first electrical component (13) in the vehicle width direction.

8. The vehicle battery pack (10) according to claim 4, wherein
the bracket (41) is disposed below the first electrical component (13),
a heat dissipation member (13B) is provided on a lower surface of the first electrical component (13) while having a gap with respect to the bracket (41),
the bracket (41) faces the second electrical component (14) in a vehicle front-rear direction, and
an interval between the bracket (41) and the second electrical component (14) is set to be smaller than the interval between the first electrical component (13) and the second electrical component (14).

## Patentansprüche

1. Fahrzeugbatteriepack (10), das umfasst:
ein Batteriefach (20), in dem ein Batteriemodul (11) gebaut ist;
ein erstes elektrisches Bauteil (13), das dazu konfiguriert ist, elektrische Leistung aus dem Batteriemodul (11) umzuwandeln;
ein zweites elektrisches Bauteil (14), das dazu konfiguriert ist, das Batteriemodul (11) mit dem ersten elektrischen Bauteil (13) elektrisch zu verbinden; und
ein Gehäuse (30), das dazu konfiguriert ist, das Batteriefach (20), das erste elektrische Bauteil (13) und das zweite elektrische Bauteil (14) unterzubringen, **dadurch gekennzeichnet, dass**
das erste elektrische Bauteil (13) und das zweite elektrische Bauteil (14) Seite an Seite auf einer Fahrzeugvorderseite und einer Fahrzeugrückseite in einem Raum eingerichtet sind, der auf einer seitlichen Seite des Batteriefachs (20) in dem Gehäuse (30) in einer Fahrzeugbreitenrichtung gebildet ist, und die elektrisch miteinander über ein leitendes Element (15) verbunden sind,
das erste elektrische Bauteil (13) einen ersten Verbindungsabschnitt (13A) beinhaltet, mit dem ein Endabschnitt des leitenden Elements (15) verbunden ist,
das zweite elektrische Bauteil (14) einen zweiten Verbindungsabschnitt (14A) beinhaltet, mit dem der andere Endabschnitt des leitenden Elements (15) verbunden ist,
der erste Verbindungsabschnitt (13A) und der zweite Verbindungsabschnitt (14A) derart eingerichtet sind, dass Höhenpositionen des ersten Verbindungsabschnitts (13A) und des zweiten Verbindungsabschnitts (14A) unterschiedlich sind,
das leitende Element (15) einen geneigten Abschnitt (15A) beinhaltet, der geneigt ist, um von dem zweiten Verbindungsabschnitt (14A) in Richtung des ersten Verbindungsabschnitts (13A) höher zu sein, und
ein Zwischenraum zwischen dem ersten elektrischen Bauteil (13) und dem zweiten elektrischen Bauteil (14) bereitgestellt ist.

2. Fahrzeugbatteriepack (10) nach Anspruch 1, wobei
der erste Verbindungsabschnitt (13A) auf einer Seite entgegengesetzt zu dem Batteriefach (20) in der Fahrzeugbreitenrichtung in Bezug auf den zweiten Verbindungsabschnitt (14A) angeordnet ist, und
in einer Draufsicht das leitende Element (15) einen gekrümmten Abschnitt (15B) beinhaltet, der von dem zweiten Verbindungsabschnitt (14A) zu dem ersten Verbindungsabschnitt (13A) gekrümmt ist.

3. Fahrzeugbatteriepack (10) nach Anspruch 1 oder 2, wobei
das erste elektrische Bauteil (13) und das zweite elektrische Bauteil (14) an Positionen niedriger als eine obere Oberfläche des Batteriefachs (20) eingerichtet sind,
das erste elektrische Bauteil vor dem zweiten elektrischen Bauteil (14) angeordnet ist, und
eine Rückseiten-Bodenoberfläche des ersten elektrischen Bauteils (13) an einer Position höher als eine obere Vorderseitenoberfläche des zweiten elektrischen Bauteils (14) angeordnet ist.

4. Fahrzeugbatteriepack (10) nach einem der Ansprüche 1 bis 3, wobei
eine Bodenoberfläche (30A) des Gehäuses (30) einen ersten Bodenoberflächenabschnitt (30B) beinhaltet, der ein Bereich ist, der mit dem ersten elektrischen Bauteil (13) in einer Auf-Ab-Richtung überlappt, und einen zweiten Bodenoberflächenabschnitt (30C), der ein Bereich ist, der das zweite elektrische Bauteil (14) in der Auf-Ab-Richtung überlappt,
eine obere Oberfläche des ersten Bodenoberflächenabschnitts (30B) einen ausgewölbten Abschnitt (30D) beinhaltet, der in Bezug auf den zweiten Bodenoberflächenabschnitt (30C) nach oben ausgewölbt ist, um sich der Seite des ersten elektrischen Bauteils (13) zu nähern, und
das erste elektrische Bauteil (13) auf einer oberen Oberfläche des ausgewölbten Abschnitts (30D) über einen Träger (41) getragen ist.

5. Fahrzeugbatteriepack (10) nach einem der Ansprüche 1 bis 4, wobei
ein Kühlgebläse (12) auf einem Rückseitenendabschnitt einer oberen Oberfläche des Gehäuses (30) bereitgestellt ist,
und
das erste elektrische Bauteil (13) und das Kühlgebläse (12) an unterschiedlichen Positionen in einer Höhenrichtung eingerichtet sind.

6. Fahrzeugbatteriepack (10) nach Anspruch 5, das weiter Folgendes umfasst: eine Leitung (50), die mit dem Kühlgebläse (12) verbunden ist, wobei
die Leitung (50) einen Fahrzeugbreitenrichtung-Erweiterungsabschnitt (62) beinhaltet, der sich in der Fahrzeugbreitenrichtung zwischen dem ersten elektrischen Bauteil (13) und dem zweiten elektrischen Bauteil (14) erstreckt.

7. Fahrzeugbatteriepack (10) nach Anspruch 6, wobei
die Leitung (50) einen s-Erweiterungsabschnitt (61) in Vorderseiten-Rückseiten-Richtung beinhaltet, der sich in einer Fahrzeug-Vorderseiten-Rückseiten-Richtung erstreckt, und
der Erweiterungsabschnitt (61) in Vorderseiten-Rückseiten-Richtung (61) einen Deckabschnitt (61A) beinhaltet, der dem ersten elektrischen Bauteil (13) in der Fahrzeugvorderseiten-Rückseiten-Richtung zugewandt ist, und einen Außenseitenabschnitt (61B), der in Bezug auf ein Seitenende des ersten elektrischen Bauteils (13) in der Fahrzeugbreitenrichtung nach außen angeordnet ist.

8. Fahrzeugbatteriepack (10) nach Anspruch 4, wobei
der Träger (41) unter dem ersten elektrischen Bauteil (13) angeordnet ist, ein Wärmeableitungselement (13B) auf einer unteren Oberfläche des ersten elektrischen Bauteils (13) bereitgestellt ist, während es einen Spalt in Bezug auf den Träger (41) aufweist,
wobei der Träger (41) dem zweiten elektrischen Bauteil (14) in einer Fahrzeug-Vorderseiten-Rückseiten-Richtung zugewandt ist,
und
ein Zwischenraum zwischen dem Träger (41) und dem zweiten elektrischen Bauteil (14) dazu eingestellt ist, kleiner zu sein als der Zwischenraum zwischen dem ersten elektrischen Bauteil (13) und dem zweiten elektrischen Bauteil (14).

## Revendications

1. Bloc-batterie de véhicule (10) comprenant :
un boîtier de batterie (20) dans lequel un module de batterie (11) est intégré ;
un premier composant électrique (13) configuré pour convertir de la puissance électrique provenant du module de batterie (11) ;
un second composant électrique (14) configuré pour connecter électriquement le module de batterie (11) au premier composant électrique (13) ; et
un logement (30) configuré pour loger le boîtier de batterie (20), le premier composant électrique (13) et le second composant électrique (14),
caractérisé en ce
le premier composant électrique (13) et le second composant électrique (14) sont agencés côte à côte sur un côté avant de véhicule et un côté arrière de véhicule dans un espace formé sur un côté latéral du boîtier de batterie (20) dans logement (30) dans une direction de largeur de véhicule, et sont connectés électriquement l'un à l'autre via un élément conducteur (15),
le premier composant électrique (13) comprend une première partie de connexion (13A) à laquelle une partie d'extrémité de l'élément conducteur (15) est connectée,
le second composant électrique (14) comprend une seconde partie de connexion (14A) à laquelle l'autre partie d'extrémité de l'élément conducteur (15) est connectée,
la première partie de connexion (13A) et la seconde partie de connexion (14A) sont agencées de telle sorte que des positions de hauteur de la première partie de connexion (13A) et de la seconde partie de connexion (14A) sont différentes,
l'élément conducteur (15) comprend une partie inclinée (15A) qui est inclinée pour être plus élevée à partir de la seconde partie de connexion (14A) vers la première partie de connexion (13A), et
un intervalle est prévu entre le premier composant électrique (13) et le second composant électrique (14).

2. Bloc-batterie de véhicule (10) selon la revendication 1, dans lequel
la première partie de connexion (13A) est disposée sur un côté opposé au boîtier de batterie (20) dans la direction de largeur de véhicule par rapport à la seconde partie de connexion (14A), et
dans une vue de dessus, l'élément conducteur (15) comprend une partie incurvée (15B) qui est incurvée à partir de la seconde partie de connexion (14A) vers la première partie de connexion (13A).

3. Bloc-batterie de véhicule (10) selon la revendication 1 ou 2, dans lequel
le premier composant électrique (13) et le second composant électrique (14) sont agencés à des positions inférieures à une surface supérieure du boîtier de batterie (20),
le premier composant électrique (13) est disposé devant le second composant électrique (14), et
une surface inférieure latérale arrière du premier composant électrique (13) est disposée dans une position plus haute qu'une surface supérieure latérale avant du second composant électrique (14).

4. Bloc-batterie de véhicule (10) selon l'une quelconque des revendications 1 à 3, dans lequel :
une surface inférieure (30A) du logement (30) comprend une première partie de surface inférieure (30B) qui est une région qui chevauche le premier composant électrique (13) dans une direction supérieure inférieure, et une seconde partie de surface inférieure (30C) qui est une région qui chevauche le second composant électrique (14) dans la direction supérieure inférieure,
une surface supérieure de la première partie de surface inférieure (30B) comprend une partie bombée (30D) qui est bombée vers le haut par rapport à la seconde partie de surface inférieure (30C) pour s'approcher du côté du premier composant électrique (13), et
le premier composant électrique (13) est supporté sur une surface supérieure de la partie bombée (30D) par l'intermédiaire d'un support (41).

5. Bloc-batterie de véhicule (10) selon l'une quelconque des revendications 1 à 4, dans lequel :
un ventilateur de refroidissement (12) est prévu sur une partie d'extrémité arrière d'une surface supérieure du logement (30), et
le premier composant électrique (13) et le ventilateur de refroidissement (12) sont agencés à différentes positions dans le sens de la hauteur.

6. Bloc-batterie de véhicule (10) selon la revendication 5, comprenant en outre :
un conduit (50) connecté au ventilateur de refroidissement (12), dans lequel
le conduit (50) comprend une partie (62) s'étendant dans la direction de largeur véhicule qui s'étend dans la direction de largeur de véhicule entre le premier composant électrique (13) et le second composant électrique (14).

7. Bloc-batterie de véhicule (10) selon la revendication 6, dans lequel
le conduit (50) comprend une partie (61) s'étant dans la direction avant-arrière qui s'étend dans une direction avant-arrière de véhicule, et
la partie (61) s'étendant dans la direction avant-arrière comprend une partie faisant face (61A) qui fait face au premier composant électrique (13) dans la direction avant-arrière du véhicule, et une partie latérale extérieure (61B) disposée vers l'extérieur par rapport à une extrémité latérale du premier composant électrique (13) dans la direction de largeur de véhicule.

8. Bloc-batterie de véhicule (10) selon la revendication 4, dans lequel
le support (41) est disposé au-dessous du premier composant électrique (13),
un élément de dissipation de chaleur (13B) est prévu sur une surface inférieure du premier composant électrique (13) tout en ayant un espace par rapport au support (41),
le support (41) fait face au second composant électrique (14) dans une direction avant-arrière de véhicule, et
un intervalle entre le support (41) et le second composant électrique (14) est réglé pour être inférieur à l'intervalle entre le premier composant électrique (13) et le second composant électrique (14).
